(19) Europäisches Patentamt
European Patent Office
Office européen des brevets

(11) Veröffentlichungsnummer: **0 170 184**
**B1**

# (12) EUROPÄISCHE PATENTSCHRIFT

(45) Veröffentlichungstag der Patentschrift: **17.10.90**

(51) Int. Cl.$^5$: **C 09 D 109/00**

(21) Anmeldenummer: **85109143.9**

(22) Anmeldetag: **22.07.85**

## (54) Verfahren zur Herstellung sikkativierter wässriger Lacke mit Polybutadien/Maleinsäureanhydrid-Addukten als Bindemittel.

(30) Priorität: **02.08.84 DE 3428495**

(43) Veröffentlichungstag der Anmeldung:
**05.02.86 Patentblatt 86/06**

(45) Bekanntmachung des Hinweises auf die Patenterteilung:
**17.10.90 Patentblatt 90/42**

(84) Benannte Vertragsstaaten:
**AT BE CH DE FR GB IT LI NL SE**

(56) Entgegenhaltungen:
**DE-A-1 815 014**
**DE-A-2 633 362**
**DE-A-3 047 681**
**FR-A-2 014 860**
**FR-A-2 033 905**
**FR-A-2 359 158**

(73) Patentinhaber: **BAYER AG**
**D-5090 Leverkusen 1 Bayerwerk (DE)**

(72) Erfinder: **Stahl, Hans Georg, Dr.**
**Theodor-Wobnitz-Strasse 22**
**D-2900 Oldenburg (DE)**
Erfinder: **Höhlein, Peter, Dr.**
**Windmühlenweg 3 e**
**D-4152 Kempen 3 (DE)**
Erfinder: **Traenckner, Hans-Joachim, Dr.**
**Amselweg 3**
**D-3032 Fallingbostel (DE)**
Erfinder: **Fleiter, Lothar, Dr.**
**Bärenstrasse 7**
**D-4150 Krefeld (DE)**
Erfinder: **Schwindt, Jürgen, Dr.**
**H.T.-von-Böttinger-Strasse 14**
**D-5090 Leverkusen 1 (DE)**

**EP 0 170 184 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erfindung betrifft ein Verfahren zur Herstellung sikkativierter wäßriger Lacke mit gepfropften Polybutadien/Maleinsäureanhydrid-Addukten, die halbamidiert oder -verestert und teilweise neutralisiert sind, als Bindemittel.

Für die Verwendung von Polybutadienölen als Basis für Lackbindemittel hat immer ein Anreiz bestanden, weil Polybutadiene mit hohem cis-Anteil an der Luft rasch trocknen und die so erhaltenen Filme gegenüber Chemikalien sehr resistent sind.

In der DE—AS 12 92 288 und in der DE—PS 12 19 684 wird die Modifizierung von Polybutadienen durch Anlagerung von Maleinsäureanhydrid beschrieben. Filme aus diesen Addukten weisen eine gegenüber nicht modifizierten Polybutadienen verbesserte Haftung auf.

Durch Pfropfreaktion ungesättigter Monomerer auf Polybutadien/Maleinsäureanhydrid-Addukte werden Produkte mit verbesserter Trockung erhalten (DE—AS 27 33 274 = US—PS 41 62 240), die auch eine Vielzahl anderer guter Eigenschaften besitzen sollen (DE—AS 26 33 362 = US—PS 40 75 135, DE—AS 27 54 733 = US—PS 41 37 182). Sowohl die Polybutadien/Maleinsäureanhydrid-Addukte (DE—AS 10 26 900) als auch die aus ihnen hergestellten Pfropfprodukte (DE—AS 26 33 362, 27 33 274, 27 54 733) können partiell verestert oder amidiert werden, und die aus den Anhydridgruppen entstehenden Carboxylgruppen können teilweise oder vollständig neutralisiert werden, damit das Harz wasserlöslich bzw. wasserdispergierbar wird.

Gemäß der japanischen bekanntgemachten Patentanmeldung 43 381/1974 und der japanischen veröffentlichten Patentanmeldung 73488/1973 wird eine Emulsion durch Polymerisation eines Vinylmonomeren in Gegenwart eines maleinierten Polybutadiens oder maleinierten Butadien-Copolymerisates als Emulgator hergestellt.

Laut DE—OS 2733274 wurde jedoch durch Nacharbeiten festgestellt, daß die gemäß JP 43 381/1974 hergestellte Emul sin eine relativ geringe Stabilität aufweist und zu Überzügen mit relativ schlechten Eigenschaften wie einer geringen Korrosionsbeständigkeit führt, da das maleinierte Produkt des Polybutadiens mit vielen 1,4-Bindungen im Molekül im Inneren Doppelbindungen aufweist, so daß die Pfropfpolymerisation mit dem Vinylmonomeren kaum abläuft.

Um diese Nachteile zu umgehen, wird gemäß DE—OS 2733274 das maleinierte Produkt eines Polydiolefins mit vielen 1,4-Bindungen oder ein Copolymerisat davon mit Verbindungen pfropfpolymerisiert, die vinylpolymerisierbare Doppelbindungen enthalten.

Die auf diese Weise hergestellten Vinyl-Pfropfpolymeremulsionen besitzen verschiedene Vorteile, z.B. eine feinere Teilchengröße der Emulsion und außerdem bessere Frostbeständigkeit, Mischbarkeit mit Pigment und mechanische Stabilität auf.

Andererseits zeigen sie wegen ihres hochmolekularen Charakters Nachteile wie begrenztes Pigmentaufnahmevermögen, Glanzminderungen sowie Verträglichkeitsprobleme mit anderen Polymeren.

Als Haupthindernis, für eine universelle Anwendung muß jedoch die Polymerisationsart selbst gesehen werden, die in wäßriger Suspension durchgeführt wird und damit die Auswohl des Reaktionsmediums allein auf Wasser einschränkt und außerdem nur die Herstellung sehr hochmolekularer Produkte zuläßt.

Will man wäßrige Lacke auf Basis der beschriebenen Bindemittel zwecks beschleunigter Trockung sikkativieren, so verbietet sich die Verwendung wasserlöslicher Sikkative, weil sie den getrockneten Lackfilm für Wasser und Chemiekalien angreifbar machen. Wasserunlösliche Sikkative lassen sich wiederum nicht homogen in wäßrigen Lack verteilen, was aber Voraussetzung für eine regelmäßige Trockung wäre. Die an sich denkbare Variante, wonach das Sikkativ dem modifizierten Polybutadien vor dessen Verteilung in der wäßrigen Phase zugesetzt wird, würde erfordern, daß das Polybutadien bei hoher Temperatur längere Zeit gerührt wird, bis eine homogene Mischung des Sikkativs im Polybutadien tatsächlich eingetreten ist. Bei einem derartigen Verfahrensschritt, bei dem das Polybutadien längere Zeit höheren Temperaturen ausgesetzt ist, muß es jedoch zu einer Abnahme der Anzahl seiner reakativen Doppelbindungen und zu einer Viskositätserhöhung kommen, was natürlich nicht erwünscht ist.

Aufgabe der Erfindung war es, diese Nachteile zu beseitigen und ein niedermolekulares, gepfropftes maleiniertes Polybutadien mit guten Verträglichkeitseigenschaften und in der Bereitung der Lieferform breiteren Vielfalt der Lösemöglichkeiten herzustellen, dessen Zusammensetzung ein breites Einsatzspektrum wie z.B. Herstellung von Anstrichmitteln, Klebstoffen, Fasern, Papier und dergleichen abdecken sollte.

Das erfindungsgemäße Verfahren sollte insbesondere die Herstellung colöserfreier, lufttrocknender Wasserlacke mit hervorragenden Korrosionsschutzeigenschaften, schneller Trocknung, guter Haftung auf verschiedenen Untergründen, langer Lagerstabilität und damit breiter Applikationsmöglichkeiten, guter Wasserfestigkeit und großer Härte ermöglichen.

Gegenstand der Erfindung ist ein Verfahren zur Herstellung sikkativierter wäßrigen Lacke, deren Bindemittelkomponente ein teilweise neutralisiertes Harz ist, das seinerseits aus

A. 40 bis 70 Gew.-% Polybutadien,

B. 7 bis 20 gew.-% Maleinsäureanhydrid, das bis zur Gewichtshälfte durch halbtrocknende oder trocknende Öle ersetzt sein kann,

C. 10 bis 35 Gew.-% Pfropfmonomer und

D. 3 bis 10 Gew.-% Monoalkohol oder -amin,

jeweils bezogen auf die Summe der Komponenten A, B, C und D, aufgebaut ist, wobei die Carboxylgruppen dieses Harzes, die vor der Neutralisation einer Säurezahl von 40 bis 160, vorzugsweise von 50 bis 80, entsprechen, zu 20 bis 80, vorzugsweise zu 60 bis 75%, neutralisiert sind, dadurch gekennzeichnet, daß die Herstellung des Harzes aus den Komponenten A bis D ohne Wasserzusatz erfolgt und daß man der wäßrigen Phase bestehend aus Wasser, Base und gegebenenfalls Hilfsmittel vor dem Eindispergieren des Harzes aus A, B, C und D 1 bis 8, vorzugsweise 2 bis 6, Gew.-%, bezogen auf nicht-neutralisiertes Harz, der wäßrigen Dispersion eines Sikkativs zusetzt mit der Maßgabe, daß diese Sikkativdispersion

a) 15 bis 20 Gew.-% wasserunlösliches Sikkativ,

b) 10 bis 20 Gew.-% wassermischbares organisches Lösungsmittel,

c) 1 bis 20 Gew.-% Emulgator und

d) 40 bis 74 Gew.-% Wasser, jeweils bezogen auf wäßrige Sikkativdispersion, enthält.

Als eine Besonderheit der erfindungsgemäß hergestellten Lacke ist die Eigenschaft zu bewerten, daß sie die direkte Anreibung von Pigmenten im Bindemittel erlauben, ohne daß die bei Dispersionen übliche aufwendigere Arbeitsweise des Anreibprozesses über Feinteige durchgeführt werden muß.

Bevorzugte Polybutadiene A enthalten mindestens 50, in der Regel mindestens 70 und vorzugsweise mindestens 90, Gew.-% Butadien-1,3-reste und höchstens 50, in der Regel hochstens 30 und vorzugsweise höchstens 10, Gew.-% Reste mit Butadien-1,3 copolymerisierbarer ethylenisch ungesättigter Monomerer, wie z. B. 2-Chlorbutadien-1,3, 2,3-Dimethylbutadien-1,3, Isopren, Styrol, α-Chlorstyrol, Vinyltoluol, Divinyltoluol, Diisobutylen, Pentadien-1,3, Vinylacetat, Methylmethacrylat, Butylmethacrylat, Ethylacrylat, Butylacrylat, Isopropenylacetat, Allylchlorid, Allylcyanid, Dibutylitaconat, Ethyl- α- chloroacrylat, Diethylmaleat, Acrylnitril, Methacrylnitril, Ethacrylnitril.

Bevorzugte Polybutadiene besitzen als Zahlenmittel bestimte Molekulargewichte von 300 bis 10 000, vorzugsweise von 700 bis 5 000,

5 bis 90, vorzugsweise 25 bis 80, % 1,2-Verknüpfungen, und

10 bis 95, vorzugsweise 20 bis 75, % 1,4-Verknüpfungen sowie

70 bis 90% cis-Doppelbindungen,

10 bis 30% trans-Doppelbindungen und

0 bis 3% Vinyldoppelbindungen.

Bevorzugte Polybutadiene A besitzen Viskositäten von 150 bis 50 000, vorzugsweise von 200 bis 5 000, cPoise bei 20°C, eine Jodzahl nach Wiys von 400 bis 470 g Jod/100 g Substanz und eine Dichte von 0.800 bis 0.950 g/ml bei 20°C.

Derartige Polybutadiene sind bekannt; sie werden z. B. in der DE—AS 11 86 631 und in den US—PS 37 89 046 und 37 89 090 beschrieben.

Bevorzugte Fettsäuren und Öle, die das Maleinsäureanhydrid B bis zur Hälfte ersetzen können, sind solche mit Jodzahlen von 120 bis 210, vorzugsweise von 150 bis 190, wie z. B. Sonnenblumenöl, Sojaöl, Tallöl, Ricinenöl, Oiticicaöl, Perillaöl, Saffloröl, vorzugsweise Leinöl und Holzöl, und die Fettsäuren dieser Öle.

Die Herstellung der Addukte aus Polybutadien A, Maleinsäureanhydrid B (und gegebenenfalls halbtrocknenden oder trocknenden Öle oder deren Fettsäuren) kann nach bekannten Methoden erfolgen. Im allgemeinen erhitzt man die Komponenten 1 bis 3 Stunden auf Temperaturen von 100 bis 250°C bei gleichzeitigem Durch- oder Überleiten eines Inertgasstromes, z.B. Stickstoff, wobei der Zusatz von 0.01 bis 0.5 Gew.-%, bezogen auf die Summe A + B, eines Polymerisationsinhibitors zweckmäßig ist. Bevorzugte Inhibitoren sind beispielsweise Hydrochinon, 2,5-Di-tert.-butyl-hydrochinon und -benzochinon, vorzugsweise Kupfer und in organischen Lösungsmitteln lösliche Kupferverbindungen, wie Kupfernaphthenat und Kupferacetylacetonat.

Bevorzugte Pfropfmonomere C sind Monomere, die wenigstens eine ethylenische Doppelbindung besitzen, insbesondere Vinyl-, Vinyliden-, Acryl- und Methacrylverbindungen, wie z. B. Styrol, -Methylstyrol, p-Chlorstyrol, Vinyltoluol, Acrylsäure- und Methacrylsäureester von $C_1$—$C_{18}$-Alkoholen, Methoxybutylacrylat, Methoxybutylmethacrylat, Methoxyethylacrylat, Methoxyethylmethacrylat, Ethoxybutylacrylat, Ethoxybutylmethacrylat, Allylacrylat, Allylmethacrylat, Glycidylmethacrylat, Glycidylacrylat, Hydroxypropylmethacrylat, Diethylaminoethylmethacrylat, Allyloxethylacrylat, Allyloxethylmethacrylat, Vinylpyridin, Butadien, Isopren, Chloropren, Acrylnitril, Methyacrylnitril, Vinylacetat, Vinylchlorid, Acrylsäure, Methacrylsäure, Itaconsäure, Acrylamid, Methylacrylamid, N-Methylacrylamid, N-Methylolacrylamid, N-Methylolmethacrylamid, 2-Hydroxyethylmethacrylat, Acrolein und Mischungen dieser Monomeren.

Die Pfropfreaktion kann in Lösung vorzugsweise aber als Massepolymerisation durchgeführt werden, vorzugsweise in Gegenwart eines Radikalbildners bei einer Temperatur von 20 bis 200, insbesondere von 60 bis 180°C.

Ähnlich geht man bei der Lösungspolymerisation vor mit dem Unterschied, daß dann in organischer Lösung bei 50 bis 130°C gearbeitet wird.

Die partielle Veresterung bzw. Amidierung des Pfropfprodukts kann nach üblichen Methoden erfolgen. Beispielsweise wird das Pfropfprodukt in Gegenwart, vorzugsweise aber in Abwesenheit eines organischen Lösungsmittels bei 30 bis 150°C, gegebenenfalls in Gegenwart eines Polymerisationsinhibitors und gegebenenfalls eines Katalysators, mit dem Monoalkohol bw. Monoamin umgesetzt.

Bevorzugte Monoalkohole und -amine sind z. B. Dimethylamin, Diethylamin, Diethanolamin, Di-isopropylamin, Di-n-butylamin, Methanol, Ethanol, Isopropanol, n-Propanol, tert.-Butanol, iso-Butanol, n-Butanol, 2-Hydroxyethylacrylat, 2-Hydroxypropylacrylat, 2-Hydroxyethyl-methacrylat, 2-Hydroxypropylmethacrylat, N-Methylol(meth)-acrylamid und deren Mischungen.

Unter "partieller' Veresterung bzw. Amidierung des Pfropfproduktes wird die ringöffnende Reaktion mit 10 bis 90% der Anhydridgruppen des Pfropfprodukts verstanden. Der Veresterungs- bzw. Amidierungsgrad, de zum Herstellen einer stabilien Emulsion notwendig ist, hängt in erster Linie von der Anzahl der Anhydridgruppen des Addukts aus A und B ab und kann im Einzelfall experimentell bestimmt werden.

Man kann diese Halbester und Halbamide natürlich auch so herstellen, daß man das Addukt aus A und B mit dem Monoalkohol bzw. -amin umsetzt und dann den so erhaltenen Halbester bzw. das Halbamid mit dem Monomer C pfropft.

Da in der bevorzugten Ausführungsform — nämlich der Massepolymerisation — nach der letzten Umsetzung ein viskoses Carboxylgruppen — haltiges lösungsmittelfreies Bindemittel vorliegt, muß es in eine wasserverdünnbare Form gebracht werden, was durch Neutralisation von mindestens 20% der neutralisations fähigen Carboxylgruppen geschieht.

Zur Neutralisation kann man entweder eine wäßrige anorganische Base, wie Natron- oder Kalilauge oder Ammoniak, ode ein quaternäres Ammoniumhydroxid, wie Trimethyl-benzyl- oder -laurylammoniumhydroxid, verwenden. Vorzugsweise verwendet man jedoch wasserlösliche primäre, sekundäre und tertiäre Amine, wie Methylamin, Ethylamin, Propylamin, Dimethylamin, Diethylamin, Dipropylamin, Trimethylamin, Tripropylamin, Monoethanolamin, Monobutanolamin, Diethanolamin, Dibutanolamin, Triethanolamin und Tributanolamin.

Der pH-Wert des in Wasser dispergierten, neutralisierten gepfropften Halbamids oder Halbesters sollte im Bereich von 6,0 bs 10,0, vorzugsweise 7—9 gehalten werden. Wenn der pH-Wert wesentlich niedrige als 6,0 ist, tritt eine physikalische Trennung der Dispersion ein.

Für die verschiedenen Einsatzzwecke liegen diese harzartigen Produkte als wäßrige Dispersion mit einem Gehalt an festem Harz von 1 bis 60 Gew.-% vor. Der hier verwendete Ausdruck "wäßrige Dispersion" umfaßt zweiphasige, wäßrige Harzsysteme, insbesondere solche, bei denen die wäßrige Phase die kontinuierliche Phase bildet, und wird hier so gebraucht, daß er auch homogene wäßrige Lösungen umfaßt, die optisch klar erscheinen. Diese wäßrigen Dispersionen haben dispergierte Phasen mit einem mittleren Teilchendurchmesser von 0,1 bis 5 Mikron.

In der wäßrigen Dispersion kann das Trägerharz als solches für die Herstellung von klaren Filmen verwendet werden, doch enthalten die Dispersionen in der Regel noch ein Pigment und übliche Zusatzstoffe. Als Pigment kann man die üblichen Pigmente benutzen, wie Eisenoxide, Bleioxide, Strontiumchromat, Ruß, Titandioxid, Talkum, Bariumsulfat und dergleichen und Mischungen dieser und anderer Pigmente. Auch Farbpigmente können in den Dispersionen enthalten sein, wie Cadmiumgelb, Cadmiumrot, Phthalocyaninblau, Chromgelb, Toluidinrot, hydratisiertes Eisenoxid und dergleichen. Die Dispersionen können weiterhin Dispergiermittel oder oberflächenaktive Mittel enthalten.

In der Regel wird das Pigment und das oberflächenaktive Mittel, falls sie verwendet werden, zusammen mit einem Teil des Trägerharzes zerkleinert, um eine Paste herzustellen. Diese Paste wird dann mit dem Hauptanteil des Trägerharzes gemischt um die als Überzugsmasse zu verwendende Dispersion herzustellen. Als Beispiele von anderen Zusatzstoffen, die den Überzugsmassen beigefügt werden können, seien Antioxidantien, Netzmittel, Trocknungsmittel, Antischaummittel und Suspendiermittel genannt.

Bevorzugte Sikkative a) sind die Naphthenate, Resinate, Oleate, Linoleate, Octoate und Maleate der Metalle Cobalt, Mangan, Blei, Nickel, Chrom, Zirkon, Eisen, Zink, Aluminium und Calcium. Die bevorzugten Sikkative sind Cobaltnaphthenat und Cobaltoctoat.

Bevorzugte wassermischbare organische Lösungsmittel b) sind einwertige aliphatische Alkohole wie Methanol, Ethanol, Isopropanol, Glykolakylether wie Glykolmonobutylether und deren Ester wie Ethylglykolacetat, cyclische Ether wie Dioxan, Tetrahydrofuran, Ketone wie Aceton und — vorzugsweise — Lactame wie N-Methylpyrrolidon.

Bevorzugte Emulgatoren c) können ionischer oder nichtionischer Art oder Mischtypen sein, wie sie z. B. in "Methoden der Organischen Chemie" (Houben-Weyl), Bd. 14/1, 4. Auflage, Georg Thieme Verlag, Stuttgart 1961, S. 190—208, beschrieben sind.

Bevorzugte ionische Emulgatoren sind $C_{12-18}$-Alkyl-sulfate und -sulfonate. Bevorzugte nichtionische Emulgatoren sind Verbindungen der Formel

$$R^1 - O—R^3{}_mH;\ R^2 —CO—O—R^4{}_nH$$

worin $R^1$ und $R^2$ eine aliphatische, cycloaliphatische, araliphatische oder aromatische Gruppe mit 7—25 C-Atomen, $R^3$ und $R^4$ $C_2H_5O$, $C_3H_7O$ oder $C_4H_9O$ und m und n ganze Zahlen von 3 bis 100 bedeuten.

Bevorzugte Mischtyp-Emulgatoren lassen sich durch Sulfatierung der Hydroxylgruppen der nichtionischen Emulgatoren gewinnen.

Ferner sind auch Oligomere und Polymere als Emulgatoren verwendbar. Darunter fallen z. B. Schutzkolloide wie Casein, teilweise und völlig verseiftes Polyvinylacetat, Polymerisate und Copolymerisate aus Acrylsäure oder Methacrylsäure, wobei die Carboxylgruppen ganz oder teilweise neutralisiert sein können.

Die erfindungsgemäß hergestellten sikkativierten wäßrigen Lacke können aufgrund der gleichmäßigen Verteilung des Sikkativs ihre trocknungsbeschleunigende Wirkung ideal entfalten und bewirken eine schnelle oxidative Vernetzung des Lackfilms, so daß bereits nach kurzer Zeit guter Korrosionsschutz mit großer Chemicalienresistenz bei hohem mechanischem Niveau erzielt werden.

Das Auftragen der aus diesen Bindemitteln hergestellten Lacke geschieht nach dem in der Praxis üblichen Verfähren wie Spritzen, Tauchen, Gießen, Walzen usw. Auch die elektrophoretische Abscheidung aus entsprechenden Bädern kann vorgenommen werden.

In den nachstehenden Beispielen wird die Erfindung noch näher erläutert. Alle Angaben über Teile und Prozente sind Gewichtsangaben und beziehen sich auf die nicht flüchtigen Feststoffe, falls nicht ausdrücklich etwas anderes festgestellt wird.

Beispiel 1

Produkt I

In einem mit Stickstoffeinleitungsrohr, Boden- und Seitenheizung, Rückflußkühler sowie Rührer ausgestatteten 4 -1-Glaskolben werden 2090 g Polybutadienöl mit einem Molekulargewicht von 1500, eine Viskosität 750 mPa.s bei 20°C und 72% 1,4-cis-Verknüpfungen, 27% 1,4- trans- Verknüpfungen und 1% Vinyl-Verknüpfungen eingewogen und unter Zugabe von 410 g Maleinsäureanhydrid, 1,1 g Acetylaceton, 11,0 g Kupfernaphthenat (10%ige Lösung in Xylol mit 9% Cu- Gehalt) auf 180°C unter ständigem Durchleiten eines schwachen Stickstoffstromes aufgeheizt und 6 Stunden bei diese Temperatur gehalten. Man erhält ein viskoses Öl mit einer Säurezahl nach Anhydridringöffnung mit Wasser von 163.

Produkt II

Nach dem Abkühlen auf 140°C werden 861 g Styrol, 9,8 g tert.-Dodecylmercaptan und 2 g Di-tert.-butylperoxid zugegeben und der Ansatz bei dieser Temperatur gerührt, bis eine Viskosität entsprechend einer Auslaufzeit nach DIN 53 211 von 50 sec., 50%ig in Styrol, im DIN 4 mm-Becher, gemessen wird.

Dann wird bei 140°C der Druck auf ca. 1 bar erniedrigt und der Ansatz von flüchtigen Stofen befreit, bis ein Einbrennrückstand von 99,5% Feststoffgehalt resultiert und eine Viskosität entsprechend einer Auslaufzeit nach DIN 53 211 von 61 sec., 50%ig in Styrol, sowie eine Säurezahl von 103 erreicht sind.

Produkt III

Nach dem Abkühlen auf 100°C werden 198 g Diethylamin über den Rückflußkühler zugegeben und die Mischung 2 Stunden bei dieser Temperatur gerührt.

Herstellen der Dispersion V

Von der so hergestellten Harzschmelze werden 2750 g unter Rühren in eine auf 70°C erwärmte wäßrige Phase so zugegeben, sodaß eine feinteilige Dispersion mit einer Säurezahl von 73, einer Viskosität von 1380 mPa.s bei 20°C und einem Feststoffgehalt von 30,6% gebildet wird.

Die wäßrige Phase wird aus 6083 g entionisiertem Wasser, 150 g 30%iger wäßriger Ammoniaklösung, 30 g Triethylamin, 41 g Butanonoxim und 114 g de nachstehend beschriebenen Sikkativdispersion IV hergestellt.

Sikkativdispersion IV

In einem mit Rührer, Rückflußkühler und Tropftrichter ausgerüsteten 4 -1-Glaskolben werden bei Raumtemperatur 725,2 g Cobaltoctoatlösung mit 6% Cobaltmetallgehalt, gelöst in Benzin, vorgelegt und 455,6 g N- Methylpyrrolidon zugegeben Nach dem Lösen werden 455.6 g ethoxyliertes Nonylphenol unter Rühren hinzugegeben und nach dem Lösen unter langsamer Zugabe von 1363,6 g entionisiertem Wasser über den Tropftrichter homogenisiert.

Beispiel 2

Produkt I

Nach der Arbeisweise von Beispiel 1 werden aus 1500 g Polybutadienöl, 294 g Maleinsäureanhydrid, 7,5 g Kupfernaphthenat und 0,81 g Acetylaceton das Additionsprodukt hergestellt.

Produkt II

Wie im Beispiel 1 beschrieben, wird unter Zusatz von 624 g Styrol, 3,0 g Di-tert.-butylperoxoid und 7,2 g n-Dodecylmercapten ein Massepfropfcopolymerisat mit einer Viskosität entsprechend einer Auslaufzeit nach DIN 53 211 von 48 sec., 50%ig in Styrol, erzeugt das nach dem Abdetillieren flüchtiger Bestandteile bei einem reduzierten Druck von 10 Torr eine Viskosität entsprechend einer Auslaufzeit nach DIN 53 211 von 62 sec., 50%ig in Styrol, einem Feststoffgehalt von 99,6% und eine Säurezahl von 121 aufweist.

Produkt III

Nach dem Abkühlen auf 100°C werden 154,8 g Isopropanol in 15 Minuten über den Rückflußkühler zugegeben. Nach 4 Stunden Rühren bei 100°C resultiert der Halbaester des mit Styrol gepfropften maleinisierten Polybutadiens, der eine Säurezahl von 66,7 aufweist.

Herstellen der Dispersion V

2305 g der so hergestellten Harzschmelze werden unter Rühren in eine auf 70°C erwärmte wäßrige Phase so zugegeben, daß eine feinteilige Dispersion mit einer Säurezahl von 66, einer Viskosität von 2040 mPa.s bei 20°C und einem Feststoffgehalt von 30,3 gebildet wird.

Die wäßrige Phase besteht aus 5098 g entionisiertem Wasser, 125,7 g 30%iger wäßriger Ammoniaklösung, 25,0 g Triethylamin, 34,4 g Butanonoxim und 95,5 g der unter Beispiel 1 beschriebenen Sikkativdispersion IV.

Die Herstellung der Grundierungen erfolgte in der gemäß de heutigen Lacktechnik üblichen Weise:

Die gesamte einzusetzende Menge der Dispersion V wird in einem Mischbehälter vorgelegt und mit Schnellrührer bei 3000 Upm Pigmente/Extender langsam zugefügt, eingerührt und vordispergiert. Anschließend erfolgt die eigentliche Anreibung auf einer Perl- bzw. Sandmühle. Zur Erzielung der für Primer geeigneten Kornfeinheit von 25 µm und darunter, gemessen mit dem Grindometer, wird jeweils eine Dispergierzeit von 20 Minuten und eine Mahlguttemperatur von 40°C eingehalten. Das Mahlgut wird anschließend mit Wasser auf Lacklieferviskosität entsprechend einer Auslaufzeit von 100 sec., gemessen im DIN 4 mm-Becher, eingestellt.

| Anreibung | Beispiel 1 | Beispiel 2 |
|---|---|---|
| | g | g |
| vorgelegte Menge Dispersion V, ca. 30%-ig in Wasser neutralisiert | 333,0 | 330,0 |
| Eisenoxid | 51,6 | 51,4 |
| Lithopone | 78,2 | 78,0 |
| Microtalk | 26,1 | 25,8 |
| Kieselgel | 1,0 | 1,0 |
| Zinkphosphat | 52,1 | 51,7 |
| Zinkoxid | 5,2 | 5,2 |
| Schaumverhinderungsmittel | 1,0 | 1,0 |
| Wasser | 15,0 | 15,0 |
| Summe Einwaage Mahlgut | 563,2 | 559,1 |

| Auflackierung/Fertigstellung | Beispiel 1 | Beispiel 2 |
|---|---|---|
| Mahlgut | 563,2 g | 559,1 g |
| Wasser | 4,0 g | 4,0 g |
| Gesamtmenge | 567,2 g | 563,1 g |
| pH-Wert | 8,5 | 8,75 |
| Viskosität entsprechend Auslaufzeit, DIN-Becher 4 mm/20°C von | 100 sec | 95 sec |
| Festgehalt | 55,4 % | 55,1 % |

Dieses Lackmaterial wird mit der Hantel zur Prüfung auf Glasplatten bei einer Spalthöhe von 120 µm aufgezogen.

TABELLE 1

Filmaufzüge auf Glasplatten

| | | |
|---|---|---|
| Trockenfilmdicke | 30 µm | 30 µm |
| Trocknung bei Raumtemperatur: | | |
| staubtrocken | 20 Minuten | 50 Minuten |
| klebfrei | 30 Minuten | 80 Minuten |
| Nagelhärte n. 16 h | gut- | gut |
| n. 45 h | sehr gut | sehr gut |
| Pendelhärte (König) n. 16 h | 45 sek. | 49 sek. |
| n. 45 h | 85 sek. | 80 sek. |
| Durchtrocknung n. 16 h | durchgetrocknet | durchgetrocknet |
| Trocknung 30 Min./80°C | | |
| Nagelhärte nach dem Abkühlen | gut | gut |
| nach 1 Tag bei Raumtemperatur | gut | gut |
| Pendelhärte (König) | | |
| nach dem Abkühlen | 38 sek. | 35 sek. |
| nach 1 Tag bei RT | 60 sek. | 55 sek. |
| Durchtrocknung nach dem Abkühlen | durchgetrocknet | durchgetrocknet |

Zur Einstellung auf Spritzviskosität wird mit Wasser auf eine Viskosität entsprechend einer Auslaufzeit von 35 sec, DIN-Becher 4 mm/20°C weiterverdünnt. Die Spritzapplikation erfolgt mit einer Becherspritzpistole mit einem Spritzdruck von 4 bar und einer Spritzdüse von 1,2 mm. Gespritzt wird auf mit Butylacetat entfetteten Karossriebleche von 1 mm Dicke.

Tabelle 2

Aufspritzung auf Karosseriebleche

| | Beispiel 1 | Beispiel 2 |
|---|---|---|
| Trockenfilmdicke | 35 µm | 35 µm |
| Wasserfestigkeit nach Trocknung bei RT für 16 h (Proben in Wasser eingetaucht) | | |
| nach 1 h | unverändert | unverändert |
| nach 3 h | unverändert | unverändert |
| nach 24 h | spur ausgebleicht, Blasen | etwas ausgebleicht, Blasen |
| Korrosionsschutz | | |
| Salzsprühtest (DIN 50 021) nach Lufttr. u. Lagerung bei RT: | | |
| nach 24 h | ohne Befund | |
| nach 96 h | Blasen am Schnitt bei Schabetest 20% abgekratzt, keine Unterrostungen | wie Beispiel 1 |
| nach 120 h | Blasen am Schnitt bei Schabetest 50% abgekratzt, keine Unterrostung | |
| Schwitzwassertest gem. DIN 50 017 | | |
| nach Lufttrocknung und Lagerung bei RT: | | |
| nach 24 h | ohne Befund | ohne Befund |
| nach 96 h | kein Ausbleichen Blasen | etwas ausgebleicht Blasen |
| nach 168 h | Blasen | Blasen |

Tabelle 3

| Lagerstabilität | Beispiel 1 /sec/ | Beispiel 2 /sec/ |
|---|---|---|
| Lagerung der Grundierung bei 40°C | | |
| Anfang | 100 | 100 |
| 7 Tage | 80 | 78 |
| 14 Tage | 60 | 57 |
| 28 Tage | 54 | 50 |
| 42 Tage | 50 | 45 |
| bei Raumtemperatur | | |
| Anfang | 100 | 100 |
| 1 Monat | 104 | 102 |
| 2 Monate | 108 | 105 |
| 4 Monate | 101 | 104 |

**Patentansprüche**

1. Verfahren zur Herstellung sikkativierter wäßriger Lacke, deren Bindemittel ein teilweise neutralisiertes Harz ist, das seinerseits aus

A. 40 bis 70 Gew.-% Polybutadien,

B. 7 bis 20 gew.-% Maleinsäureanhydrid, das bis zur Gewichtshälfte durch halbtrocknende oder trocknende Öle ersetzt sein kann,

C. 10 bis 35 Gew.-% Pfropfmonomer und

D. 3 bis 10 Gew.-% Monoalkohol oder -amin,

jeweils bezogen auf die Summe der Komponenten A, B, C und D,

aufgebaut ist, wobei die Carboxylgruppen dieses Harzes, die vor der Neutralisation einer Säurezahl von 40 bis 160 entsprechen, zu 20 bis 80% neutralisiert sind,

dadurch gekennzeichnet, daß die Herstellung des Harzes aus den Komponenten A bis D ohne Wasserzusatz erfolgt und daß man der wäßrigen Phase bestehend aus Wasser, Base und gegebenenfalls Komponente D und gegebenenfalls Hilfsmittel vor dem Eindispergieren des Harzes aus A, B, C und gegebenfalls D 1 bis 8 Gew.-%, bezogen auf nicht-neutralisiertes Harz, der wäßrigen Dispersion eines Sikkativs zusetzt mit der Maßgabe, daß diese Sikkativdispersion

a) 15 bis 20 Gew.-% wasserunlösliches Sikkativ,

b) 10 bis 20 Gew.-% wassermischbares organisches Lösungsmittel,

c) 1 bis 20 Gew.-% Emulgator und

d) 40 bis 74 Gew.-% Wasser, jeweils bezogen auf wäßrige Sikkativdispersion, enthält.

2. Verfahren nach Anspruch 1, dadurch gekennzeichnet, daß die Komponente b) N-Methylpyrrolidon ist.

**Revendications**

1. Procédé pour la préparation de vernis aqueux à incorporation siccative, dont l'agent liant est une résine partiellement neutralisée qui, pour sa part, et constituée de

A. 40 à 70% en poids de polybutadiène,

B. 7 à 20% en poids d'anhydride maléique, que l'on peut remplacer jusqu'à la moitié de son poids par des huiles siccatives ou demisiccatives,

C. 10 à 35% en poids de monomère greffé et

D. 3 à 10% en poids de mono-alcool ou -amine,

chaque fois calculé sur la somme des constituants A, B, C et D, les groupes carboxyles de cette résine qui, avant la neutralisation, correspondent à un indice d'acide de 40 à 160, étant neutralisés jusqu'à 20 à 80%, caractérisé en ce que la préparation de la résine, à partir des constituants A à D, a lieu sans addition d'eau et en ce que, à la phase aqueuse constituée d'eau, de bases, éventuellement du constituant D et éventuellement d'agents auxiliaires, avant la mise en dispersion de la résine, constituée de A, B, C et éventuellement de D, on ajoute 1 à 8% en poids (calculé sur la résine non neutralisée) de la dispersion aqueuse d'un siccatif avec cette caractéristique que cette dispersion siccative contient

a) 15 à 20% en poids de siccatif insoluble dans l'eau,.

b) 10 à 20% en poids de solvant oranique miscible à l'eau,

c) 1 à 20% en poids d'émulsifiant et

d) 40 à 74% en poids d'eau, chaque fois calculé sur la dispersion siccative aqueuse.

2. Procédé selon la revendication 1, caractérisé en ce que, le constituant b) est la N-méthylpyrrolidone.

**Claims**

1. A process for the production of siccative-containing aqueous paints of which the binder is a partly neutralized resin of

A. 50 to 70% by weight polybutadiene,

B. 7 to 20% by weight maleic anhydride of which up to half by weight may be replaced by semi-drying or drying oils,

C. 10 to 35% by weight graft monomer and

D. 3 to 10% by weight monoalcohol or monoamine,

based in each case on the sum of components A, B, C and D, 20 to 80% the carboxyl groups of this resin, which correspond to an acid value of 40 to 160 before neutralization, being neutralized, characterized in that the production of the resin of components A to D takes place without the addition of water and in that 1 to 8% by weight, based on non-neutralized resin, of an aqueous dispersion of a siccative is added to the aqueous phase consisting of water, base and optionally component D and optionally auxiliaries before the resin of A, B, C and optionally D is incorporated by dispersion, with the proviso that the siccative dispersion contains

a) 15 to 20% by weight water-insoluble siccative,

b) 10 to 20% by weight water-miscible organic solvent,

c) 1 to 20% by weight emulsifier and

d) 40 to 74% by weight water,

based in each case on the aqueous siccative dispersion.

2. A process as claimed in claim 1, characterized in that component b) is N-methyl pyrrolidone.